# EUROPEAN PATENT APPLICATION

(11) **EP 4 759 397 A1**
(43) Date of publication of application: **17.06.2026**
(21) Application number: 24218954.6
(22) Date of filing: 11.12.2024
(51) Int. Cl.: B01D 53/04, B01D 53/047

(54) **PRESSURE SWING ADSORPTION PLANT AND INSTALLATION METHOD**

(71) Applicant: Linde GmbH, 82049 Pullach (DE)
(72) Inventor: Pickert, Tommy, 82049 Pullach (DE); Prohammer, Rainer, 82049 Pullach (DE)
(74) Representative: Lu, Jing

(57) **Abstract**

The invention relates to a pressure swing adsorption, PSA, plant (400a) comprising multiple PSA adsorber vessels (414, 416) at least one PSA tail gas drum (430, 432, 434, 436), and at least one skid arrangement (425), wherein each of the PSA adsorber vessels is fluidly connected or connectable, by means of the at least one skid arrangement, to the at least one PSA tail gas drum, and wherein at least one selected vessel is arranged in at least one storey other than a lowermost storey, from multiple storeys (441, 442, 443, 444) above each other, wherein the at least one selected vessel is selected from the multiple PSA adsorber vessels and the at least one PSA tail gas drum.

## Description

The present invention relates to a pressure swing adsorption, PSA, plant comprising multiple PSA adsorber vessels and one or multiple PSA tail gas drums, and to a method for installing such a PSA plant.

### Background

Very light components such as hydrogen or helium can be recovered from gas mixtures using pressure swing adsorption (PSA) with very high purity. It is mainly used in chemical and petrochemical processes as well as in the steel industry.

In pressure swing adsorption, separation is achieved based on the different adsorption forces of the components to be separated using a cyclic pressure change. During an adsorption phase, a feed gas mixture is introduced under elevated pressure into an adsorber and non-adsorbed gas is withdrawn from the adsorber as high-pressure product. Partial expansion or depressurization of the adsorber in co-current mode (i.e., in the same direction as adsorption was performed) occurs after termination of the adsorption phase, and the thus obtained co-current expansion gas is passed on at least in part to other adsorbers to partially re-pressurize the other adsorbers. After termination of the co-current expansion, a counter current expansion and, at the lowest process pressure, a purge is performed. This desorbed gas (so-called tail gas) is usually provided to a tail gas drum. Finally, the switching cycle is completed by subsequently re-pressurizing the adsorber to the adsorption pressure.

PSA generally operates at near-ambient temperatures and uses special adsorptive materials (e.g., zeolites or activated carbon), which are contained in adsorption vessels in a layered bed.

Depending on the application with or for which such PSA is used, a corresponding PSA plant can be very large and costly. It is thus an objective of the present invention to improve the provision of a PSA plant.

### Disclosure of the Invention

This objective is achieved by providing a pressure swing adsorption plant and a method installing such a plant with the features of the independent claims. Embodiments of the invention are the subject of the dependent claims and of the description that follows.

The invention relates to pressure swing adsorption (PSA) and plants used for it (pressure swing adsorption plants or PSA plants). Such a PSA plant comprises, as already described above, multiple PSA adsorber vessels, at least one (i.e. one or multiple) PSA tail gas drum, and at least one skid arrangement (or just skid). A tail gas drum (also called off-gas drum or surge drum) is a vessel that provides volume to reduce the variability of the tail gas pressure and composition. The skid or skid arrangement comprises or refers to a piping module connecting the PSA adsorber vessels and the tail gas drums enabling the desired flow of fluid/gas.

At least one selected vessel is arranged in at least one storey other than a lowermost storey (or ground storey), from multiple storeys (or levels) above each other. The at least one selected vessel is selected from the multiple PSA adsorber vessels and the at least one PSA tail gas drum (which is, as such, also a vessel). In this way, the ground area required for the entire PSA plant can be reduced. The PSA vessels and tail gas drums can be distributed in storeys rather than all being located on ground.

In an embodiment, the at least one PSA tail gas drum is arranged horizontally. Such horizontal direction means that the respective PSA tail gas drum is (at least essentially) parallel to the ground. Each of the PSA adsorber vessels is installed such that it is fluidly connected or connectable, by means of piping and valves (i.e. the skid arrangement), to the at least one horizontally arranged PSA tail gas drum. Such horizontal tail gas drum(s) reduce the piping required to connect the PSA adsorber vessels to the tail gas drum(s). In particular compared to conventional PSA plants or units, where all of the multiple PSA adsorber vessels and the tail gas drum(s) are arranged vertically, this is of advantage.

In an embodiment, the PSA plant comprises multiple storeys (or levels) above each other. The multiple PSA adsorber vessels are arranged in at least one of the multiple storeys. A storey of the PSA plant, in particular, refers to an essentially horizontally oriented space in which PSA adsorber vessels and/or (horizontally arranged) tail gas drums - and preferably also valve skids - are arranged. Any skid components can be provided in addition. The skid can also be provided in a separate one of the multiple storeys.

In this way, the ground area required for the entire PSA plant can be reduced. The PSA vessels and (horizontal) tail gas drums can be distributed in storeys rather than all being located on ground.

In an embodiment, the at least one horizontally arranged PSA tail gas drum is arranged in a lowermost storey. In an embodiment, the multiple PSA adsorber vessels are arranged in at least one other storey than the lowermost storey. This allows reducing the required ground area for setting up the PSA plant.

In an embodiment, the PSA plant comprises multiple PSA tail gas drums, wherein all of the multiple PSA tail gas drums are arranged horizontally and in the lowermost storey. The multiple PSA adsorber vessels arranged in the at least one other storey than the lowermost storey are essentially arranged above the multiple PSA tail gas drums. This allows, for example, having a compact arrangement without the need for vertical tail gas drums. For example, the multiple PSA adsorber vessels can be arranged above the horizontally arranged PSA tail gas drums located in the lowermost storey. The ground area required is then much less than of that which would be required for a conventional PSA plant where all PSA adsorber vessels and the tail gas drums are located on ground. With more than two storeys the required ground area can even be further reduced.

In an embodiment, the multiple PSA adsorber vessels are arranged in multiple storeys, i.e. the PSA vessels are distributed in storeys rather than all being located on ground. In this way, the ground area required for the entire PSA plant can also be reduced. If, for example, the PSA plant comprises two storeys, each having half of the entire number of PSA adsorber vessels, the ground area required is (at least approximately) half of that which would be required for a conventional PSA plant where all PSA adsorber vessels are located on ground. With more than two storeys the required ground area can even be further reduced. Preferably, each of the multiple storeys comprises at least essentially the same number of PSA adsorber vessels.

In particular, in at least one storey the PSA adsorber vessels are arranged in one row or more parallel rows, and the at least one horizontally arranged PSA tail gas drum is arranged along the one or at least one of the more rows.

Using such horizontally arranged PSA tail gas drums allows connecting the individual PSA adsorber vessels (or at least some of them) directly or at least with much less piping to the (horizontally arranged) PSA tail gas drum, rather than using (much or long) piping to connect the PSA adsorber vessels to a (conventionally vertically arranged) PSA tail gas drum. In this way, the often long pipes can be avoided. The further a PSA adsorber vessel, in a conventional PSA plant, is located away from the (vertically arranged) PSA tail gas drum, the longer the pipes need to be (which has a negative impact on the performance of the PSA plant due to higher pressure loss).

If the horizontally arranged tail gas drum is used, the pipes required for connecting the PSA adsorber vessels to the PSA tail gas drum, can be very short, in particular, if the PSA tail gas drum is arranged along a row of PSA vessels or below a row of PSA adsorber vessels (e.g., with the tail gas drum in the lower one and the PSA adsorber vessels in the upper one of two storeys). This is of even further advantage with the multi storey arrangement, as this avoids the even longer pipes which were required to guide the tail gas from one end to the (vertically arranged) PSA tail gas drum at the other end, in a conventional PSA plant.

In addition, such horizontally arranged PSA tail gas drums and the direct connections of the PSA adsorber vessels to it, reduce or even minimize any pressure drop between the PSA adsorber vessel and the PSA tail gas drum, which improves the overall performance of the PSA plant.

In an embodiment, the at least one horizontally arranged PSA tail gas drum is arranged in the at least one storey other than the lowermost storey (i.e. the tail gas drum is the selected vessel). Further, the at least one skid arrangement is arranged in the lowermost storey. This also allows reducing required ground area.

Applications for this kind of PSA plants are, among others, purification of carbon-dioxide (CO2) for the decarbonization of the atmosphere in an environmental context and purification of hydrogen (H2).

In an embodiment, in each of at least two storeys the PSA adsorber vessels are arranged in one or more parallel rows. Each PSA adsorber vessel of the at least two storeys is fluidly connected or connectable to the one or the same horizontally arranged PSA tail gas drum. In this way, a single PSA tail gas drum can be used for even more PSA vessels. The at least two storeys are, in particular, ones that are arranged directly above each other (if there are more further storeys).

In an embodiment, the PSA plant further comprises at least one PSA tail gas drum that is arranged vertically, i.e. in addition to at least one horizontally arranged PSA tail gas drum, there is at least one vertically arranged PSA tail gas drum. The at least one horizontally arranged PSA tail gas drum is fluidly connected or connectable to the at least one vertically arranged PSA tail gas drum. In this way, the combined volume of the PSA tail gas drums can be increased as required by the process while the advantages of the horizontally arranged PSA tail gas drums are maintained. The vertically arranged PSA tail gas drums require only low ground area.

In an embodiment, a ground area of the PSA plant or of the PSA vessels or tail gas drums in the lowermost of the multiple storeys is of an essentially rectangular shape.

Further advantages and embodiments of the invention will be apparent from the description and the accompanying drawing. The invention is illustrated schematically by means of embodiments in the drawing and is described below with reference to the drawing.

### Short description of the figures

- Fig. 1: illustrates a working principle of a PSA plant;
- Fig. 2a: illustrates a conventional PSA plant;
- Fig. 2b: illustrates a PSA plant according to an embodiment;
- Fig. 3a: illustrates a PSA plant according to another embodiment;
- Fig. 3b: illustrates a PSA plant according to another embodiment;
- Fig. 4a: illustrates a PSA plant according to another embodiment; and
- Fig. 4b: illustrates a PSA plant according to another embodiment.

### Detailed description of the figures

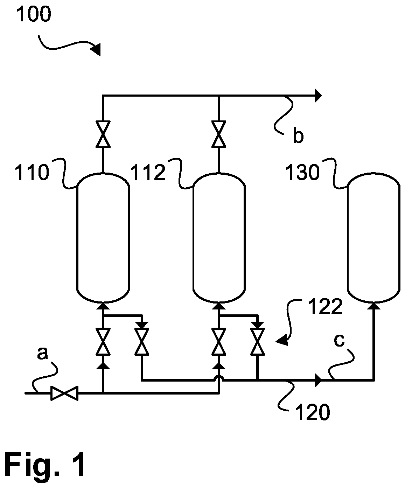

Fig. 1 schematically illustrates components of a PSA plant 100 in order to illustrate the working principle of a PSA plant and the pressure swing adsorption process. The PSA plant 100 comprises, by means of example, two PSA adsorber vessels 110, 112 and a PSA tail gas drum 130. The working principle of a PSA plant will briefly be described based on the two PSA adsorber vessels 110, 112; it is noted that in practice PSA plants typically have many more PSA adsorber vessels, what will be described later.

When such PSA plant is operated, a feed gas stream "a" is fed to PSA adsorber vessel 110. The feed gas of the stream "a" may comprise a gas mixture that is to be separated. The PSA adsorber vessel 110 comprises an adsorbent material. Under high pressure, some components of the gas mixture are adsorbed (adsorption is adhesion due to forces on a molecular level) at the adsorbent material. The remaining gas passes through the vessel and is released as product gas stream "b". Once sufficient gas has been adsorbed in the adsorbent material, the pressure in the PSA adsorber vessel 110 is decreased and the gas that had been adsorbed in the adsorbent material is now desorbed and released as tail gas "c".

In order to allow the described flows of gas, the valves which are generally denoted 122, need to be switched accordingly.

The PSA adsorber vessel 112 corresponds to the PSA adsorber vessel 110. However, the PSA adsorber vessel 112 is operated such that when from PSA adsorber vessel 110 product gas "b" is released, tail gas "c" is released from PSA adsorber vessel 112. Again, the valves need to be switched accordingly. In this way, a continuous flow of feed gas "a" and also of product gas "b" can be provided.

The tail gas "c" from PSA adsorber vessels 110, 112 is fed to the PSA tail gas drum 130 via piping 120. Such piping 120 connects the PSA vessels or their valves to the PSA tail gas drum. The more PSA vessels used, the more and longer and bigger piping is required.

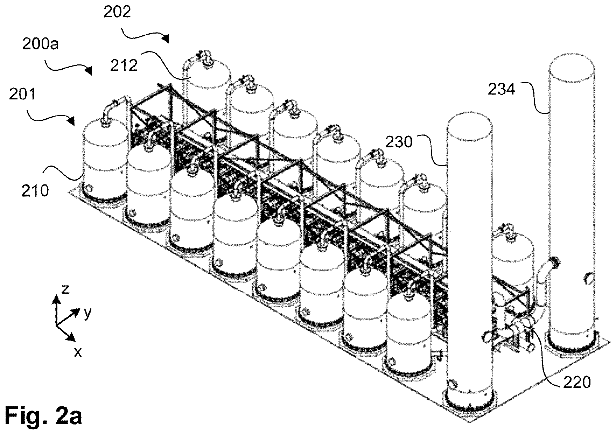

Fig. 2a schematically illustrates a conventional PSA plant 200a. The working principle is that described in Fig. 1. Like components are referred to with like or similar reference numerals.

The PSA plant 200a comprises multiple PSA adsorber vessels; by means of example, there are shown 16 PSA adsorber vessels. These PSA adsorber vessels are arranged in two parallel rows 201, 202. By means of example, one PSA adsorber vessel of each row is denoted 210 and 212, respectively. For example, up to five PSA adsorber vessels can be operated in parallel (like described for PSA adsorber vessel 112 of Fig. 1). Their location is basically random within the total of 16 vessels. They are not necessarily neighbouring each other.

At the same time up to five other PSA adsorber vessels are releasing their tail gas to the tail gas drum 230 or to multiple tail gas drums 230, 234 - this depends on the required total volume to achieve a buffering and levelling of pressure and composition of the tail gas stream "c" at the outlet connections of the tail gas drums. The releasing of the tail gas is part of a sequence of operation steps to regenerate (i.e., clean) the adsorbent material of the adhering molecules.

Each PSA adsorber vessel of PSA plant 200a is fluidly connected, via skid or skid arrangement (incl. valves and piping) and a tail gas line 220 to a tail gas drum 230 of the PSA plant 200, as has also been described with respect to Fig. 1. The major part of the tail gas line extends between the two rows 201, 202 along the x direction and connects to the tail gas drums 230, 234. As can be seen in Fig. 2a, there is required much and long piping due to many PSA adsorber vessels.

Further, Fig. 2a shows that in the PSA plant 200a all PSA adsorber vessels are arranged on ground, i.e. in a plane (indicated by x-y-plane), all PSA adsorber vessels and the PSA tail gas drums 230, 234 are arranged vertically, i.e., oriented along the z-axis (or along the direction of gravity).

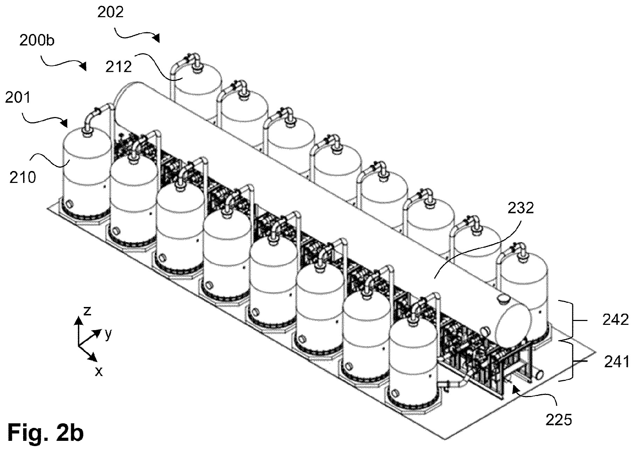

Fig. 2b schematically illustrates a PSA plant 200b according to an embodiment. The working principle is that described in Fig. 1 and Fig. 2a, and the PSA plant 200b is similar to the PSA plant 200a according to Fig. 2a. Instead of the two vertically arranged tail gas drums, however, a horizontally arranged tail gas drum 232 is provided.

Skid arrangement (incl. valves and piping) 225 is arranged in a lowermost storey 241 and the horizontally arranged tail gas drum 232 is arranged in storey 242, which is another storey than the lowermost storey 241, arranged above the lowermost storey. In addition, the PSA adsorber vessels are arranged in two parallel rows 201, 202, and the horizontally arranged tail gas drum 232 is arranged along these rows. This reduces the required ground area because the tail gas drum is arranged above the skid arrangement but not next to it.

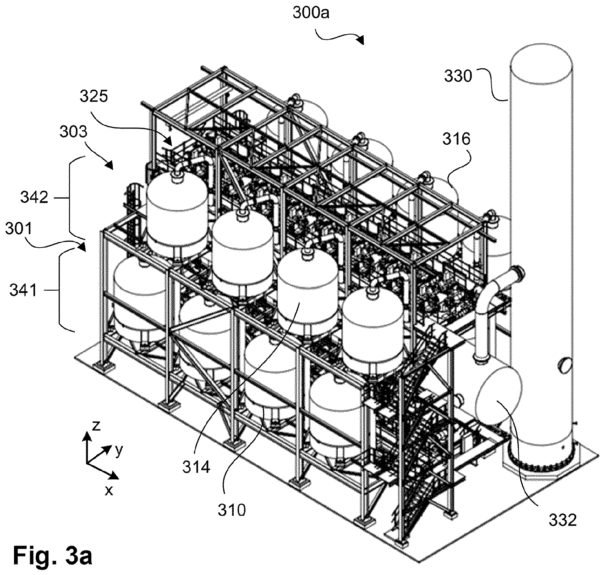

Fig. 3a schematically illustrates a PSA plant 300a according to an embodiment. The working principle is that described in Fig. 1 and Fig. 2. Like components are referred to with like or similar reference numerals.

The PSA plant 300a comprises multiple storeys and multiple PSA adsorber vessels; by means of example, there are shown 16 PSA adsorber vessels (not all of them are visible in the perspective view). These multiple PSA adsorber vessels are arranged in multiple storeys above each other. By means of example, there are a first storey 341 on ground or the lowermost storey, and a second storey 342 above the first storey 341; note that "above" refers to the z-axis (or direction of gravity).

In each of the two storeys 341, 342, the PSA adsorber vessels are arranged in two parallel rows 301, 303 (other rows not visible or referred to). By means of example, one PSA adsorber vessel of row 301 is denoted 310, one PSA adsorber vessel of row 303 is denoted 314, and one PSA adsorber vessel of another row is denoted 316. For example, up to five PSA adsorber vessels can be operated in parallel (like described for PSA adsorber vessel 112 of Fig. 1). Their location is basically random within the total of 16 vessels. They are not necessarily neighbouring each other and not necessarily located in only one row; they can even be arranged in different storeys.

Further, the PSA plant 300a comprises, by means of example, two PSA tail gas drums 330, 332. PSA tail gas drum 330 is arranged vertically, and PSA tail gas drum 332 is arranged horizontally. PSA tail gas drum 332 is arranged along all of the four rows of PSA adsorber vessels described above. Each PSA adsorber vessel of the four rows - what in the example shown corresponds to all PSA adsorber vessels of two adjacent storeys and all PSA adsorber vessels of the PSA plant - are fluidly connected to the PSA tail gas drum 332. The PSA tail gas drum 332, in turn, is fluidly connected to PSA tail gas drum 330 to increase the volume, depending on the required total volume to achieve a buffering and levelling of pressure and composition of the tail gas stream "c" at the outlet connections of the tail gas drums. The tail gas drum 330 may also be connected to the horizontal tail gas drum 332 of a second PSA plant (if applicable and not shown in Fig. 3a) servicing both PSA plants with 50% of its volume.

The pipes used for these connections and required valves are part of one or more so-called skids, one of which is referred to by 325 and is arranged, e.g., in storey 342.

Compared to PSA plant 200a of Fig. 2a, it can be seen that arranging the PSA vessels in multiple storeys above each other, greatly reduces the required area on ground for the PSA plant. Both PSA plants, plant 200a and plant 300a, comprise the same number and size of PSA adsorber vessels; however, the required ground area for PSA plant 300a is only about 60% of the area required for PSA plant 200a.

In addition, it can be seen that using the horizontally arranged PSA tail gas drum 332 allows much less and shorter pipes to connect the PSA adsorber vessels to it, compared to the PSA plant 200a where the vertically arranged PSA tail gas drum(s) are located at one end.

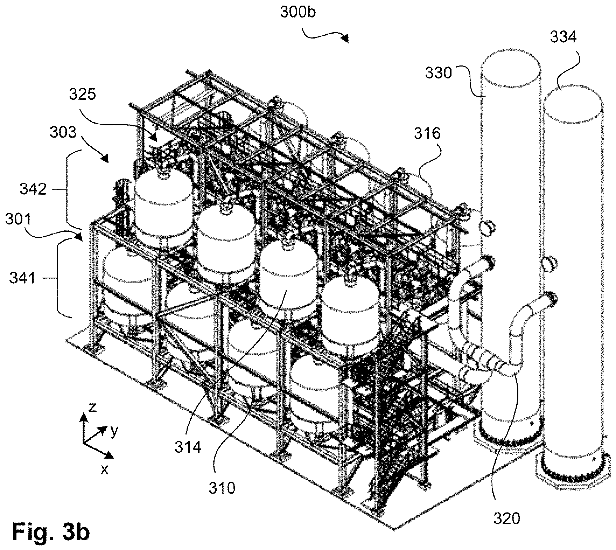

Fig. 3b schematically illustrates a PSA plant 300b according to an embodiment. The working principle is that described in Fig. 1 and Fig. 2a, and the PSA plant 300b is similar to the PSA plant 300a according to Fig. 3a. Instead of the horizontally arranged tail gas drum 332, however, another vertically arranged tail gas drum 334 is provided. In other words, there are only vertically arranged but no horizontally arranged tail gas drums. Apart from the skid arrangement 325, a tail gas line 320 is used to connect the PSA adsorber vessels to the vertically arranged tail gas drums 330, 334.

Compared to the PSA plant 200a according to Fig. 2a, this also reduces the required ground area because the PSA adsorber vessels are arranged in multiple storeys above each other, i.e. not all vessels are on ground or in a lowermost storey.

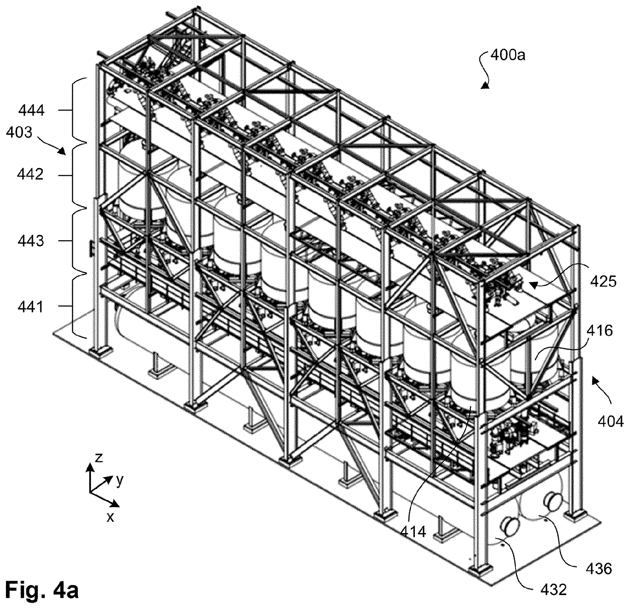

Fig. 4a schematically illustrates a PSA plant 400a according to another embodiment. The working principle is that described in Fig. 1 and Fig. 2a. Like components are referred to with like or similar reference numerals.

The PSA plant 400a comprises multiple storeys and multiple PSA adsorber vessels; by means of example, there are shown 16 PSA adsorber vessels (not all of them are visible in the perspective view). By means of example, the PSA plant 400a comprises four storeys, there is a first or lowermost storey 441 on ground, and a second or upper storey 442 above the first storey 441; note that "above" refers to the z-axis (or direction of gravity). In addition, two storeys 443, 444 are provided for valve skids containing the piping, which connects the PSA adsorber vessels fluidly to each other and to the tail gas drums 432, 436. One of these skids is referred to by 425.

The multiple PSA adsorber vessels are arranged in the upper storey 442, in particular, arranged in two parallel rows 403, 404. By means of example, one PSA adsorber vessel of row 403 is denoted 414, and one PSA adsorber vessel of the other row 404 is denoted 416. For example, up to five PSA adsorber vessels can be operated in parallel (like described for PSA adsorber vessel 112 of Fig. 1). Their location is basically random within the total of 16 vessels. They are not necessarily neighbouring each other and not necessarily located in only one row.

Further, the PSA plant 400a comprises, by means of example, two PSA tail gas drums 432, 436. Each PSA adsorber vessel of the two rows - what in the example shown corresponds to all PSA adsorber vessels of the PSA plant - are fluidly connected to at least one of the PSA tail gas drums 432, 436. The PSA tail gas drums 432, 436 can fluidly be connected to each other to increase the volume, depending on the required total volume to achieve a buffering and levelling of pressure and composition of the tail gas stream "c" (see Fig. 1) at the outlet connections of the tail gas drums.

Compared to PSA plant 200a of Fig. 2a, it can be seen that arranging the PSA vessels in an upper storey and the tail gas drums horizontally in a lowermost storey, greatly reduces the required area on ground for the PSA plant. In addition, the storeys 443, 444 for the skids additionally reduce the required space. Both PSA plants, plant 200a and plant 400a, comprise the same number and size of PSA adsorber vessels; however, the required ground area for PSA plant 400a is less than the area required for plant 300a and even more reduced compared with the area required for PSA plant 200a.

In addition, it can be seen that using the horizontally arranged PSA tail gas drums 432, 436 allows much less and shorter pipes to connect the PSA adsorber vessels to it, compared to the PSA plant 200a where the vertically arranged PSA tail gas drum(s) are located at one end.

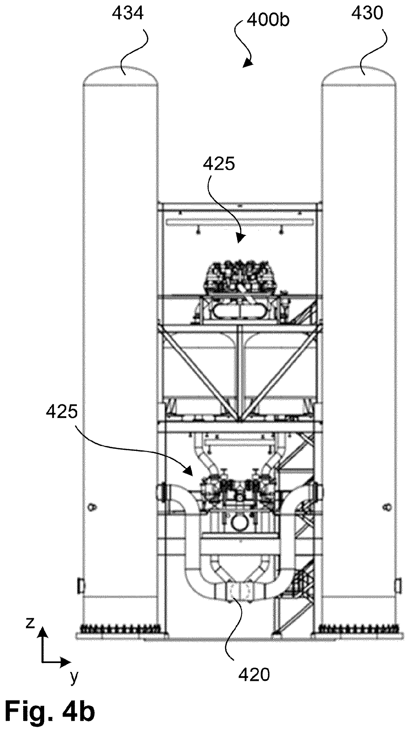

Fig. 4b schematically illustrates a PSA plant 400b according to an embodiment. The working principle is that described in Fig. 1 and Fig. 2a, and the PSA plant 400b is similar to the PSA plant 400a according to Fig. 4a. Instead of the horizontally arranged tail gas drums, however, two vertically arranged tail gas drums 430, 434 are provided. In other words, there are only vertically arranged but no horizontally arranged tail gas drums. Apart from the skid arrangements 425, a tail gas line 420 is used to connect the PSA adsorber vessels to the vertically arranged tail gas drums 430, 434.

Compared to the PSA plant 200a according to Fig. 2a, this also reduces the required ground area because the PSA adsorber vessels are arranged in a higher storey than the ground or lowermost storey. In that a skid arrangement - and part of the tail gas line 420 - is provided below the PSA adsorber vessels, and also another skid arrangement is provided above the PSA adsorber vessels, the required ground area is reduced.

From the above embodiments, it can be seen that in particular the PSA adsorber vessels can be arranged in multiple storeys above each other, or the horizontally arranged tail gas drums and skid arrangements can be arranged in multiple storeys above each other in order to reduce the required ground area. Also, a combination of both is possible. It is noted that a height (in z-direction) of the storeys may differ between PSA adsorber vessels, tail gas drums and skid arrangements.

## Claims

1. A pressure swing adsorption, PSA, plant (200b, 300a, 300b, 400a, 400b) comprising multiple PSA adsorber vessels (310, 314, 316, 414, 416), at least one PSA tail gas drum (232, 330, 332, 430, 432, 434, 436), and at least one skid arrangement (225, 325, 425),
wherein each of the PSA adsorber vessels is fluidly connected or connectable, by means of the at least one skid arrangement, to the at least one PSA tail gas drum, and
wherein at least one selected vessel is arranged in at least one storey other than a lowermost storey, from multiple storeys (241, 242, 341, 342, 441, 442, 443, 444) above each other, wherein the at least one selected vessel is selected from the multiple PSA adsorber vessels and the at least one PSA tail gas drum.

2. The PSA plant (200b, 300a, 400a) of claim 1, wherein the at least one PSA tail gas drum (232, 332, 432, 436) is arranged horizontally.

3. The PSA plant (400a) of claim 2, wherein the at least one horizontally arranged PSA tail gas drum (432, 436) is arranged in the lowermost storey (441).

4. The PSA plant (400a, 400b) of any one of the preceding claims, wherein the multiple PSA adsorber vessels are arranged in the at least one storey (442) other than the lowermost storey.

5. The PSA plant (400a) of claim 3 and 4, comprising multiple PSA tail gas drums, wherein all of the multiple PSA tail gas drums are arranged horizontally and in the lowermost storey (441), and
wherein the multiple PSA adsorber vessels arranged in the at least one storey (442) other than the lowermost storey are essentially arranged above the at least one PSA tail gas drum (432, 436).

6. The PSA plant (400a, 400b) of any one of the preceding claims, wherein the at least one skid arrangement (425) is arranged in at least one storey (443, 444) other than those storeys in which the multiple PSA adsorber vessels are arranged.

7. The PSA plant (400a) of claim 6, referring back to claim 2, wherein the at least one skid arrangement (425) is arranged in at least one storey (443, 444) other than those storeys in which the at least one horizontally arranged tail gas drum is arranged.

8. The PSA plant (300a, 300b) of any one of the preceding claims, wherein the multiple PSA adsorber vessels are arranged in multiple storeys (341, 342).

9. The PSA plant (300a) of claim 8, referring back to claim 2, wherein in at least one storey the PSA adsorber vessels are arranged in one row or more parallel rows (301, 303), and wherein the at least one horizontally arranged PSA tail gas drum (332) is arranged along the one row or at least one of the more rows.

10. The PSA plant (300a) of claim 9, wherein in each of at least two storeys (341, 342) the PSA adsorber vessels are arranged in one row or more parallel rows (301, 303), and wherein each PSA adsorber vessel of the at least two storeys is fluidly connected or connectable to the same PSA tail gas drum (332).

11. The PSA plant (200b) of claim 2, wherein the at least one horizontally arranged PSA tail gas drum (232) is arranged in the at least one storey (242) other than the lowermost storey (241), and wherein the at least one skid arrangement (225) is arranged in the lowermost storey (241).

12. A method for installing the PSA plant (200b, 300a, 300b, 400a, 400b) of any one of the preceding claims, comprising:
installing the at least one selected vessel such as to be arranged in at least one storey other than a lowermost storey, from multiple storeys (241, 242, 341, 342, 441, 442) above each other, wherein the at least one selected vessel is selected from the multiple PSA adsorber vessels and the at least one PSA tail gas drum; and
installing each of the PSA adsorber vessels, using the at least one skid arrangement, such that it is fluidly connected or connectable to the PSA tail gas drum.

13. The method of claim 12, further comprising: installing the at least one PSA tail gas drum such as to be arranged horizontally.

14. The method of claim 13, wherein installing the at least one PSA tail gas drum such as to be arranged horizontally comprises:
installing at least one horizontally arranged PSA tail gas drum in the lowermost storey; and
installing the multiple PSA adsorber vessels in at least one storey other than the lowermost storey.

15. The method of claim 12 or 13, further comprising:
installing at least a part of the PSA adsorber vessels of a first storey on ground or the lowermost storey; and
installing at least a part of the PSA vessels of a second storey above the PSA vessels of the first or lowermost storey.
